# EUROPEAN PATENT SPECIFICATION

(11) **EP 3 204 245 B1**
(45) Date of publication and mention of the grant of the patent: **05.06.2019**
(21) Application number: 15801513.1
(22) Date of filing: 08.10.2015
(51) Int. Cl.: B64C 13/04

(54) **A DIRECTIONAL CONTROL SYSTEM AND METHOD FOR A HYBRID AIR AND GROUND TRANSPORTATION VEHICLE**
DIREKTIONALES STEUERUNGSSYSTEM UND VERFAHREN FÜR EIN LUFT- UND BODENTRANSPORTHYBRIDFAHRZEUG
SYSTÈME DE COMMANDE DIRECTIONNELLE ET PROCÉDÉ POUR VÉHICULE DE TRANSPORT HYDRIBE AÉRIEN ET TERRESTRE

(30) Priority: 08.10.2014 SK 500592014; 08.10.2014 SK 501242014 U
(43) Date of publication of application: 16.08.2017
(73) Proprietor: Aeromobil S.r.o., 811 04 Bratislava (SK)
(72) Inventor: KLEIN, Stefan, 949 01 Nitra (SK)
(74) Representative: Finnegan Europe LLP
(86) International application number: PCT/SK2015/000003
(87) International publication number: WO 2016/057003

(56) References cited:
- US-A- 1 438 935
- US-A- 1 438 935
- US-A- 1 494 355
- US-A- 1 494 355
- US-A- 2 215 003
- US-A- 2 215 003
- US-A- 2 940 688
- US-A- 2 940 688
- US-A- 6 082 665
- US-A- 6 082 665

## Description

### TECHNICAL FIELD

This invention relates generally to a directional control system and method for a hybrid air and ground transportation vehicle.

### EXISTING STATE OF ART

Vehicles for ground transportation (e.g., automobiles) and for air transportation (e.g., airplanes) have existed for many years. In more recent years increasing effort has been directed to developing another category of transportation vehicles, that is a hybrid vehicle that is fully compatible with air and normal ground use all in one.

One such hybrid vehicle is the "Terrafugia Transition" described in WO 2007/114877 ("WO '877"). WO '877 publication discloses a vehicle that is both an automobile as well as a two-passenger aircraft, equipped with a four-wheel chassis and foldable wings. The power of the engine on the ground is transferred to the front axle, the wheels being steered by a conventional steering wheel, while in the air the engine spins the propeller positioned at the rear of the vehicle fuselage. During flight, the vehicle is controlled by a conventional control column or stick.

"AeroMobil" is another hybrid vehicle, described in WO 2013/032409 ("WO '409"). WO '409 also discloses a hybrid vehicle in which ground steering is by a steering wheel and control while in the air is by a control column or stick.

Document US 6082665 describes yet another directional control system for a hybrid transportation vehicle for ground and air transportation.

Having separate control systems (e.g., steering wheel and control column) for ground and air operation can be disadvantageous for a variety of reasons. For example, having separate control systems can increase complexity of the vehicle design and utilize excessive space within the cabin that is usually in short supply. In addition, during takeoff and landing, the operator of the vehicle needs to transition from one control system to the other rapidly when the vehicle lifts off the ground during takeoff or touches down during landing. Rapidly switching from one control system (e.g., steering wheel) to the other (e.g., control column) can be difficult for a variety of reasons. For example, the distance between controls, the orientation of controls, and the mode of control can all make it more difficult for an operator to switch between the systems.

The solution to these problems provides a system in which the two control systems can be closely located to allow for easy transition in use by an operator.

### SUBSTANCE OF THE INVENTION

In one aspect, the invention is directed to a directional control system for a hybrid transportation vehicle for ground and air transportation. The vehicle has at least one steerable wheel for use in ground operation, the wheel being connected to a steering mechanism, wings having moveable control surfaces, and a tail having at least one moveable control surface. The directional control system includes a first shaft having a first control input at one end, wherein the first shaft is linked to the steering mechanism, and a second shaft that extends through the first shaft and is independently rotatable and slidable with respect to the first shaft. The second shaft includes a second control input at one end, a first linkage configured to transmit a rotational movement of the second shaft to control the moveable control surfaces on the wings, and a second linkage configured to transmit an axial movement of the second shaft to control the moveable control surface on the tail. The first control input can be a steering wheel, and the second control input a steering wheel or a yoke. The first shaft can further include a connector attached to first shaft. The connector can comprise a member extending outward, perpendicular from an outer surface of the first shaft. The second shaft can include a radial first linkage, an axial second linkage, and an arrest device. The radial first linkage can comprise a member that extends perpendicularly outward from an outer surface of the second shaft. The axial second linkage can comprise a pivot mounting bracket attached to the lower end of the second shaft. The aileron connection system can include a plurality of interconnected swing-links and angular levers. The elevator connection system can include a plurality of interconnected swing-links and angular levers. The elevator connection system may also include an intermediate structure comprising a transverse shaft and a connecting arm arrangement.

In another aspect, the invention is directed to a method of controlling a hybrid transportation vehicle for ground and air operation, the vehicle having a directional control system as described herein. The method includes controlling steering of the vehicle during ground operation by manipulation of the first control input to steer the wheels and controlling flight maneuvers during flight operation by manipulation of the second control input to move the control surfaces on the wings and tail.

### OVERVIEW OF FIGURES ON THE DRAWINGS

The accompanying drawings illustrate embodiments of the control systems and methods of operation.
FIG. 1 is side perspective view of one embodiment of a hybrid vehicle configured for air operation.
FIG. 2 is a side perspective view of a hybrid vehicle configured for ground operation.
FIG. 3 is a portion of one embodiment of a control system for a hybrid vehicle.
FIG. 4 is a portion of one embodiment of a control system for a hybrid air and ground transportation vehicle, according to an exemplary embodiment.
FIG. 5 is a portion of one embodiment of a steering system for a hybrid air and ground transportation vehicle.
FIG. 6 is a portion of one embodiment of a steering system for a hybrid air and ground transportation vehicle.
FIG. 7 is a portion of one embodiment of a steering system for a hybrid air and ground transportation vehicle.
FIG. 8 is a portion of one embodiment of a steering system and linkage connection systems for a hybrid air and ground transportation vehicle.
FIG. 9 is a close of view of one embodiment of a portion of a steering system and linkage connection systems for a hybrid air and ground transportation vehicle.

Reference will now be made in detail to the non-limiting exemplary embodiments illustrated in the accompanying drawings. Wherever possible, the same reference numbers will be used throughout the drawings to refer to the same or like parts.

### THE EXAMPLES OF EMBODIMENTS OF THE INVENTION

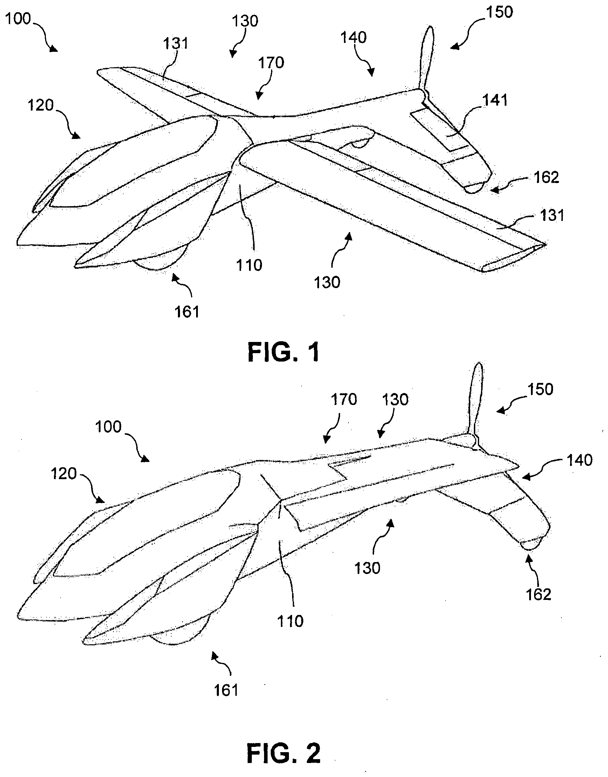

FIGS. 1 and 2 show a hybrid vehicle 100, according to one exemplary embodiment configured for air operation and ground operation respectively. The vehicle 100 is configured for air operation at least during flight, taxing, takeoff, and landing. The configuration of the vehicle 100 may be transformed from air operation to ground operation or vice versa while on the ground. The vehicle 100 is configured for ground operation while traveling on the ground, for example, driving along roadways.

The vehicle 100 comprises a body 110, a cabin 120, a set of retractable wings 130, a tail 140, a propeller 150, and wheels, which include a set of front wheels 161 and rear wheels 162. The vehicle 100 also has a chassis and engine 170 contained within the body 110 configured to drive the propeller 150 (during air operation) or the front wheels 161 or the rear wheels 162 (during ground operation).

As shown in FIGS. 1 and 2, the retractable wings 130 include an aileron 131 on each wing 130. Each aileron 131 is attached to a trailing edge of the respective wing 130 by means of a hinge. The ailerons 131 are used to control the rolling of the vehicle 100 about its longitudinal axis when flying, in the usual manner. The tail 140 includes an elevator 141 on each side of the tail 140. The elevators 141 are attached to a trailing edge of each tail section by means of a hinge. The elevators 141 are used to control the vehicle 100 pitch when flying, in the usual manner

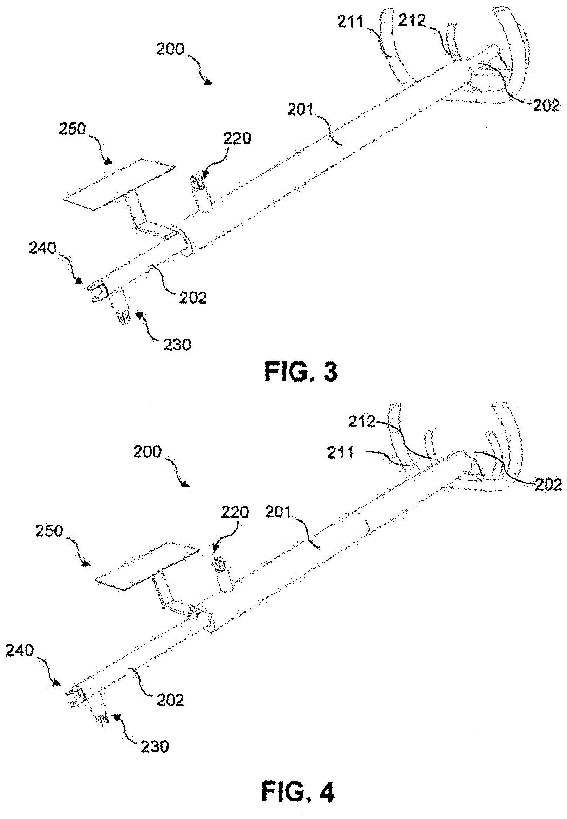

FIGS. 3-8 show one exemplary embodiment of a control system 200 configured for use with the vehicle 100. The system 200 is configured to enable directional control of the vehicle 100 during air and ground operation. The system 200 includes a first shaft 201 having a first control input, in this embodiment a steering wheel or yoke 211, attached to an upper end of the first shaft 201. The system 200 further includes a second shaft 202 having a second control input, again a steering wheel or yoke 212, attached to an upper end of second shaft 202. The first shaft 201 is a bearing-type shaft such that second shaft 202 extends coaxially through the center of the first shaft 201, the first shaft 201 and the second shaft 202 being independently rotatable and the second shaft 202 is also slideable along the longitudinal axis.

As shown in FIGS. 3-8, the first steering wheel 211 and the second steering wheel 212 are "U" shaped, however, it is contemplated that various other shaped steering wheels may be utilized, for example, a circle, an oval, a "W", etc. The first steering wheel 211 as shown in FIGS. 3-8 is larger than the second steering wheel 212. However, in other embodiments the first steering wheel 211 may be equal to or smaller than the second steering wheel 212.

The first shaft 201 further includes a connector 220 attached to first shaft 201. The connector 220 comprises a member extending outward, perpendicular from an outer surface of the first shaft 201, as shown in FIGS. 3-7. The connector 220 further includes a pivot mounting bracket attached at the outer end of the member. As shown in FIGS. 3-8, the connector 220 can be positioned such that when the first steering wheel 211 is normally centered, the connector 220 points upwardly.

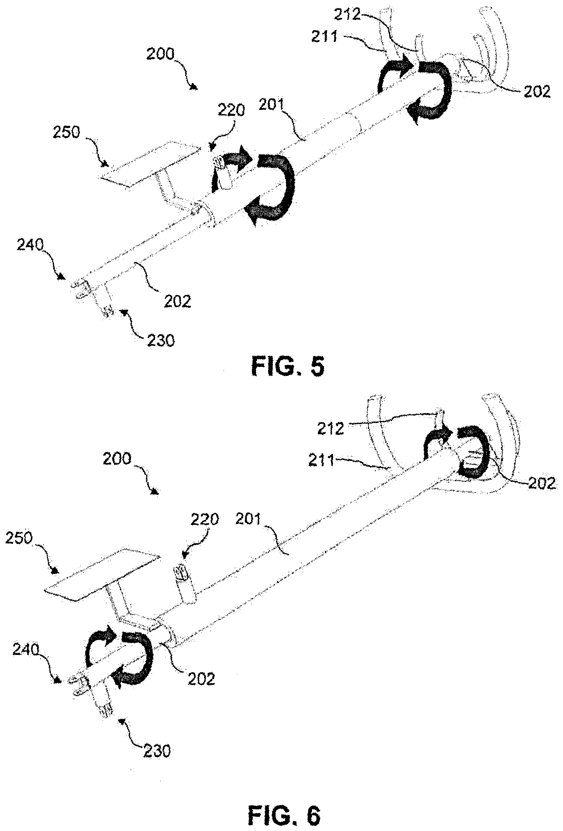

As shown in FIG. 5, the system 200 is configured such that rotation of the first steering wheel 211 causes corresponding rotation of the first shaft 201 and the connector 220 about the longitudinal axis. The connector 220 is configured to connect to a mechanism (not shown) for steering the front wheels 161. Therefore, rotation of the first steering wheel 211 controls the direction of the front wheels 161, by way of rotating the first shaft 201 and the connector 220, such that an operator of the vehicle 100 while operating on the ground may control the direction of the front wheels 161 by turning the first steering wheel 211. The first shaft 201 may act as a fulcrum caval shaft. It is contemplated that in another embodiment, the system 200 may be configured such that rotation of the first steering wheel 211 may control the direction the rear wheels 162.

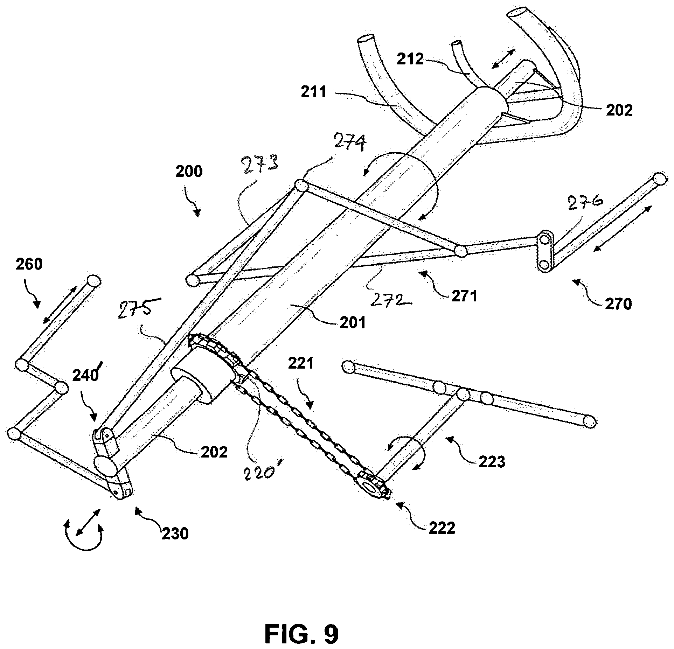

According to another embodiment, the connector 220' as shown in FIG. 9 is a gear, sprocket, or pulley that wraps around the circumference of first shaft 201. A flexible coupling 221 wraps around the connector 220' and extends around a second connector 222 that comprises another gear, sprocket, or pulley. The second connector 222 is connected to a steering shaft 223 such that rotation of the second connector 222 causes rotation of the steering shaft 223 and thereby controls the direction of the front wheels 161. The flexible coupling 221 may be a chain, cable, belt, or the like. The connector 220' can have a different (e.g. greater) diameter than the second connector 222 such that rotation of the first shaft 201 by turning the first steering wheel 211 causes the degree of rotation of the steering shaft 223 to be geared in the ratio of the diameters. For example, if the connector 220' is twice the diameter of the second connector 222, a half turn of the first steering wheel 211 will cause a full rotation of the second connector 222 and also a full rotation of the steering shaft 223. The ratio of the connector 220 to the second connector 222 can be selected, for example, such that the full range of steering applied to the wheels may be achieved with no more than one full rotation of the first steering wheel 211.

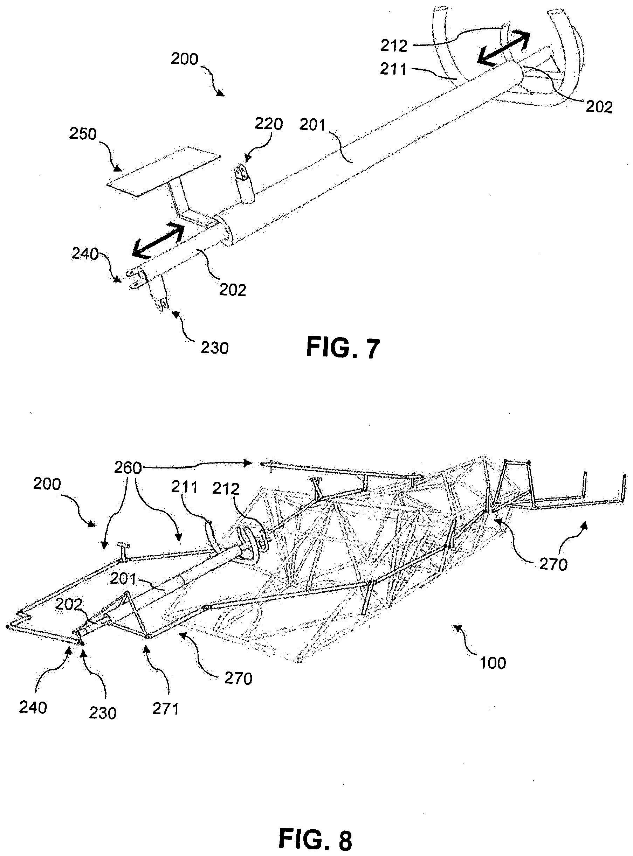

As shown in FIGS. 3-8, the second shaft 202 includes a radial first linkage 230, an axial second linkage 240, and an arrest device 250. As shown in FIG. 6, the system 200 is configured such that rotation of the second steering wheel 212 causes corresponding rotation of the second shaft 202, the radial first linkage 230, and the axial second linkage 240 about the longitudinal axis. As shown in FIG. 7, the system 200 is configured such that pushing down and/or pulling up on the second steering wheel 212 causes longitudinal movement of the second shaft 202, the radial first linkage 230, and the axial second linkage 240 along the longitudinal axis.

The radial first linkage 230 comprises a member that extends perpendicularly outward from an outer surface of the second shaft 202, as shown in FIGS. 3-8. The radial first linkage 230 further includes a pivot mounting bracket at its outer end. The radial first linkage 230 is positioned such that when the second steering wheel 212 is normally centered, the radial first linkage 230 is pointing downwardly perpendicular to the outer surface of the second shaft 202. The axial second linkage 240 comprises a pivot mounting bracket attached to the lower end of the second shaft 202, as shown in FIGS. 3-8.

The radial first linkage 230 is connected to a mechanism for controlling the ailerons 131, while the axial second linkage 240 is connected to a mechanism for controlling the elevators 141. The system 200 is configured such that rotation of the second steering wheel 212, by way of rotating the second shaft 202 and the radial first linkage 230, controls the ailerons 131 to enable an operator to roll or bank the vehicle 100 in flight. The system 200 is configured such that pushing down and/or pulling up on the second steering wheel 212, thereby causing longitudinal movement of the axial second linkage 240 along the longitudinal axis, controls the elevators 141 to enable an operator to adjust the pitch of the vehicle 100 during flight.

Connection components between the radial first linkage 230 and the mechanism for controlling the ailerons 131, and between the axial second linkage 240 and the mechanism for controlling the elevators 141 includes various linkage components. For example, connection components can include forked mechanisms with pivots, cables, rods, swing-links, angular levers, etc.

FIG. 8 shows an aileron connection system 260 and an elevator connection system 270, according to an exemplary embodiment. The aileron connection system 260 is configured to transfer the rotational motion of the radial first linkage 230 to the mechanism for controlling the ailerons 131. The aileron connection system 260 includes a plurality of interconnected swing-links and angular levers. The elevator connection system 270 is configured to transfer the longitudinal motion of the axial second linkage 240 to the mechanism for controlling the elevators 141. The elevator connection system 270 includes a plurality of interconnected swing-links and angular levers. As shown in FIGS. 8 and 9, the elevator connection system 270 may also include an intermediate structure 271 comprising a transverse shaft 272 and a connecting arm arrangement 273. The transverse shaft 272 lies approximately at right angles to the long axis of the vehicle 100 and is rotatable about its longitudinal axis. The connecting arm arrangement 273 extends from one end of the transverse shaft 272 to a connection point 274 spaced from the transverse shaft 272 and between its ends. In the embodiments shown in FIGS. 8 and 9, the connecting arm arrangement extends beyond the connection point 274 back to the transverse shaft 272 to form a triangle arrangement. The first and second shafts 201, 202 extend through the triangle and a link arm 275 extends between the axial second linkage 240, and the connection point 274. Axial movement of the second shaft 202 is translated into rotational movement of the transverse shaft 272. A drop arm 276 is provided at one end of the transverse shaft 272 and is connected to the elevator connection system 270.. The ratio of the separation of the connection point 274 from the transverse shaft 272 to the length of the drop arm 276 provides a lever acting about the fulcrum defined by the transverse shaft 272. In this way, the force available from the operator can be applied to the elevators 141 in the most appropriate manner. By extending the shafts 201, 202 through the triangular structure, the overall length taken up by this arrangement is minimized and space is left below the transverse shaft 272 (for further controls such as rudder controls, or the operator's feet or legs, not shown). It will be appreciated that shapes other than triangular can be used for the connecting arm arrangement 273, such as other polygonal shapes, curves, etc. It is also not necessary that both ends of the connecting arm arrangement 273 are connected to the transverse shaft 272. An open arrangement is also possible.

FIG. 9 shows another exemplary embodiment of the system 200, in which the second linkage 240' is positioned on the circumference of the second shaft 202 opposite the radial first linkage 230 at the end of the second shaft 202. The second linkage 240' is connected to the intermediate structure 271 by means of the link arm 275, as described above. Connection of second linkage 240' to the intermediate structure 271 may be a ball joint type connection to permit rotation of the second linkage 240' caused by rotation of the second shaft 202. The radial first linkage 230 and the aileron connection system 260 operate in the same manner as described above.

The arrest device 250, according to an exemplary embodiment, is an L-shaped bracket and plate associated with the second shaft 202, as shown in FIGS. 3-7. The arrest device 250 is configured to have an arrest and un-arrest position. FIG. 3 shows the arrest device 250 in the un-arrest position while FIG. 4 shows the arrest device 250 in the arrest position. As shown in FIG. 3, in the un-arrest position the second steering wheel 212 may be extended above the first steering wheel 211 (i.e. closer to an operator) and the second steering wheel 212 can be free to rotate about and slide along the longitudinal axis within the first shaft 201, enabling control of the roll and pitch of the vehicle 100.

As shown in FIG. 4, in the arrest position the second steering wheel 212 and the second shaft 202 may descend down such that the first steering wheel 211 and the second steering wheel 212 are at substantially the same elevation and may also be aligned. In the arrest position, the arrest device 250 is configured to prevent axial rotation and longitudinal movement of the second shaft 202 within the first shaft 201, thereby disabling roll and pitch control of the vehicle 100. Disabling roll and pitch control of the vehicle 100 is desired while operating in ground mode because such control is unnecessary and movement of the ailerons 131 and the elevators 141 while operating in ground mode may damage the vehicle 100. When transitioning from air mode to ground mode, an operator may position the arrest device 250 in the arrest position. Alternatively, the vehicle 100 may be configured to automatically transition between the arrest position and the un-arrest position during the transition from air mode to ground mode or ground mode to air mode. According to an exemplary embodiment, the arrest device 250 is configured to prevent axial rotation and longitudinal movement of the second shaft 202 by interlocking the L-shaped bracket with a pin that extends through the L-shaped bracket into a hole in the second shaft 202.

According to another exemplary embodiment, the second shaft 202 may be formed of two or more sections such that an upper section of the second shaft 202, which is connected to the second steering wheel 212, may be removable from the first shaft 201. Therefore, an operator may remove the second steering wheel 212 and the upper section of the second shaft 202 while operating in drive mode. The system 200 is configured such that removal of the second steering wheel 212 and the upper section of the second shaft 202 is prevented while the arrest device 250 is in the arrest position. Alternatively, the system 200 is configured such that removal of the second steering wheel 212 and upper section of the second shaft 202 performs the same function as the arrest device 250 (e.g., prevent operation of the ailerons 131 and the elevator 141 while operating in ground mode).

According to another exemplary embodiment, the first steering wheel 211 may be removable from the first shaft 201 or it may be tilted forward by its upper part towards the first shaft 201, when the vehicle is in air mode.

The system 200 may further include integrated controls. For example, one or more lever switches, press-button switches, and rotatable cylindrical switches located on the first steering wheel 211, the second steering wheel 212, or both. For example, a switch for controlling one or more lift flaps and a switch for changing the angle of attack of wings 130 may be located on the first steering wheel 211 and/or the second steering wheel 212. Position of the switches on the first steering wheel 211 and/or the second steering wheel 212 enables easier accessibility for the operator of the vehicle 100.

It is contemplated that in another embodiment, the first steering wheel 211 and the second steering wheel 212 is swapped such that the first steering wheel 211 controls the roll and pitch of the vehicle 100 and the second steering wheel 212 controls the direction of the front wheels 161. For this embodiment, the connector 220 for steering the front wheels 161 and the axial second linkage 240 and the radial first linkage 230 may be swapped.

The disclosed steering system may be applicable to any hybrid air and ground transportation vehicle as well as independently applicable to automobiles and aircraft. The disclosed steering system can simplify operation of the vehicle 100 by enabling both air mode and ground mode steering controls to be positioned directly in front of an operator. In addition, this simplification can reduce the space within cabin 120 utilized by independent steering systems.

When an operator is operating the vehicle 100 in ground mode the operator can utilize the first steering wheel 211 to control the direction of the front wheels 161 similarly to how a driver may operate a steering wheel in a traditional automobile to control the front wheels of the automobile. When an operator is operating the vehicle 100 in air mode, for example while flying, the operator can utilize the second steering wheel 212 to control the roll and pitch of the vehicle 100.

Prior to takeoff and after touchdown, the vehicle 100 may be configured for air mode, but operating on the ground. In consideration of these situations, the system 200 can be configured such that while operating in air mode on the ground, the first steering wheel 211 may be utilized to control the direction of the front wheels 161. For example, when the vehicle 100 is on the ground preparing for takeoff or after landing an operator may utilize the first steering wheel 211 to steer the vehicle 100. An operator may also utilize the second steering wheel 212 to steer the vehicle 100 as would a traditional airplane if desired.

The ability of an operator to quickly move their hands from the first steering wheel 211 to the second steering wheel 212 or vice versa due to the coupled arrangement of the system 200 can be particularly advantageous during liftoff and touchdown of the vehicle 100. For example, the system 200 enables an operator to utilize the first steering wheel 211 to steer the vehicle 100 during takeoff up until the point where the vehicle 100 lifts off the ground thereby preventing further steering by way of the front wheels 161. But rather than an operator having to transition from a steering wheel to lever control, the system 200 allows the operator to instantaneously slide back their hands from the first steering wheel 211 to the second steering wheel 212 and begin controlling roll and pitch of the airplane. The system 200 also enables a similar transition by the operator of the vehicle 100 during landing except the transition is from the second steering wheel 212 to the first steering wheel 211 once the front wheels 161 touches down. It is also contemplated that at times it may be advantageous to utilize the first steering wheel 211 and the second steering wheel 212 simultaneously, which an operator may easily do by having one hand on each steering wheel.

Various modifications and variations can be made to the control systems and methods described herein.

## Claims

1. A directional control system for a hybrid transportation vehicle for ground and air transportation comprising at least one steerable wheel (161) for use in ground operation, the wheel (161) being connected to a steering mechanism (223); wings (130) having movable control surfaces (131); and a tail (140) having at least one movable control surface (141); wherein the directional control system comprises: a first shaft (201) having a first control input (211) at one end, wherein the first shaft (201) is linked to the steering mechanism (223), the directional control system being **characterised in that** it comprises a second shaft (202) that extends through the first shaft (201) and is independently rotatable and slidable with respect to the first shaft (201); the second shaft (202) having: a second control input (212) at one end, a first linkage (230) configured to transmit a rotational movement of the second shaft (202) to control the movable control surfaces (131) on the wings (130), and a second linkage (240) configured to transmit an axial movement of the second shaft (202) to control the movable control surface (141) on the tail (140).

2. The directional control system of claim 1 **characterized in that** the first shaft is linked to the steering mechanism by means of a chain or toothed belt, such that rotational movement of the first shaft is transmitted to an input of the steering mechanism.

3. The directional control system of claim 1 or 2 **characterized in that** the first linkage comprises a first linkage lever arm extending radially from the second shaft.

4. The directional control system of claim 1, 2 or 3 **characterized in that** the second linkage comprises a second linkage lever arm extending radially from the second shaft.

5. The directional control system of claim 3 or 4 **characterized in that** it further comprises a mechanical linkage between the first linkage lever arm and the moveable control surfaces on the wings.

6. The directional control system of claim 3, 4 or 5 **characterized in that it** further comprises a mechanical linkage between the second linkage lever arm and the moveable control surface on the tail.

7. The directional control system of claim 6 **characterized in that** the mechanical linkage between the second linkage lever arm and the moveable control surface on the tail comprises a transverse shaft and a connection arm extending from an end region of the shaft to a connection point between the ends of the shaft and spaced laterally from the shaft, the second linkage lever arm being mechanically connected to the connection point.

8. The directional control system of claim 7 **characterized in that** the first and second shafts extend between the transverse shaft and the connection arm.

9. The directional control system of claim 7 or 8 **characterized in that** the connection arm is connected to both ends of the transverse shaft.

10. The directional control system of claim 7, 8, or 9 **characterized in that** it further comprises a third linkage extending from the transverse shaft and configured to transmit a rotational movement of the transverse shaft to control the moveable control surface on the tail.

11. The directional control system of any preceding claim **characterized in that** the second shaft further includes an arrest device configured to restrict axial and rotational movement of the second shaft when the vehicle is configured for ground operation.

12. The directional control system of any preceding claim **characterized in that** the first and second control inputs comprise steering wheels or yokes configured to rotate about a common axis.

13. The directional control system of claim 12 **characterized in that** the second steering control input is moveable between a flight position in which the second control input is spaced axially from the first control input, and a ground position in which the second control input is substantially aligned with the first control input.

14. The directional control system of any of claims 1 - 12 **characterized in that** the second shaft is formed of two or more sections, wherein a first section of the second shaft attached to the second control input is removable from the first shaft during the vehicle is configured for ground operation.

15. The directional control system of any of claims 1 - 12 **characterized in that** the second control input of the second shaft is the second steering wheel, which has foldable arms during the vehicle is configured for ground operation.

16. The directional control system of any of claims 1 - 12 **characterized in that** the first control input of the first shaft is the first steering wheel, which is removable or tiltable forward by its upper part towards the first shaft 201, during the vehicle is configured for air operation.

17. A method of controlling a hybrid transportation vehicle for ground and air operation **characterized in that** the vehicle comprises the directional control system of any preceding claim; the method comprises:
- controlling steering of the vehicle during ground operation by manipulation of the first control input to steer the wheels; and
- controlling flight maneuvers during flight operation by manipulation of the second control input to move the control surfaces on the wings and tail.

18. The method of claim 17 **characterized in that** it further includes extending the second shaft so that the second control input is axially separated from the first control input when configuring the vehicle is for air operation; and retracting the second shaft so that the second control input is substantially in alignment with the first steering control input when configuring the vehicle is for ground operation.

19. The method of claim 17 or 18 **characterized in that** it further includes engaging an arrest device configured to restrict axial and rotational movement of the second shaft when configuring the vehicle for ground operation.

20. The method of claim 17 **characterized in that** it further includes uncoupling and removing the second control input and a section of the second shaft from the first shaft or folding of the arms of the second control input of the second shaft, which is a wheel, when configuring the vehicle for ground operation.

21. The method of claim 17 **characterized in that** it further includes the option to remove the first control input of the first shaft, which is the first wheel, or it includes the option to tilt the first control input of the first shaft, which is the first wheel, by its upper part forward towards the first shaft when configuring the vehicle for air operation.

22. The method of claim 17, 18, 19, 20 or 21 **characterized in that** it further includes, during takeoff, initially controlling the vehicle using the first control input and transitioning to the second control input; and during landing, initially controlling the vehicle using the second control input and transitioning to the first control input.

## Patentansprüche

1. Direktionales Steuersystem für ein Hybridtransportfahrzeug für den Boden- und Lufttransport, umfassend mindestens ein lenkbares Rad (161) zur Verwendung im Bodenbetrieb, wobei das Rad (161) mit einem Lenkmechanismus (223) verbunden ist; Flügel (130), mit beweglichen Steuerflächen (131); und ein Heck (140) mit mindestens einer beweglichen Steuerfläche (141); wobei das direktionale Steuersystem umfasst: eine erste Welle (201) mit einem ersten Steuereingang (211) an einem Ende, wobei die erste Welle (201) mit dem Lenkmechanismus (223) verknüpft ist, wobei das direktionale Steuersystem **dadurch gekennzeichnet ist, dass** es eine zweite Welle (202) umfasst, die sich durch die erste Welle (201) erstreckt und bezüglich der ersten Welle (201) unabhängig gedreht und verschoben werden kann; wobei die zweite Welle (202) aufweist: einen zweiten Steuereingang (212) an einem Ende, eine erste Verknüpfung (230), die konfiguriert ist, um eine Drehbewegung der zweiten Welle (202) zu übertragen, um die beweglichen Steuerflächen (131) an den Flügeln (130) zu steuern, und eine zweite Verknüpfung (240), die konfiguriert ist, um eine Axialbewegung der zweiten Welle (202) zu übertragen, um die bewegliche Steuerfläche (141) am Heck (140) zu steuern.

2. Direktionales Steuersystem nach Anspruch 1, **dadurch gekennzeichnet, dass** die erste Welle mittels einer Kette oder eines Zahnriemens mit dem Lenkmechanismus verknüpft ist, so dass eine Drehbewegung der ersten Welle an einen Eingang des Lenkmechanismus übertragen wird.

3. Direktionales Steuersystem nach Anspruch 1 oder 2, **dadurch gekennzeichnet, dass** die erste Verknüpfung einen ersten Verknüpfungshebelarm umfasst, der sich radial von der zweiten Welle erstreckt.

4. Direktionales Steuersystem nach Anspruch 1, 2 oder 3, **dadurch gekennzeichnet, dass** die zweite Verknüpfung einen zweiten Verknüpfungshebelarm umfasst, der sich radial von der zweiten Welle erstreckt.

5. Direktionales Steuersystem nach Anspruch 3 oder 4, **dadurch gekennzeichnet, dass** es ferner eine mechanische Verknüpfung zwischen dem ersten Verknüpfungshebelarm und den beweglichen Steuerflächen an den Flügeln umfasst.

6. Direktionales Steuersystem nach Anspruch 3, 4 oder 5, **dadurch gekennzeichnet, dass es** ferner eine mechanische Verknüpfung zwischen dem zweiten Verknüpfungshebelarm und der beweglichen Steuerfläche am Heck umfasst.

7. Direktionales Steuersystem nach Anspruch 6, **dadurch gekennzeichnet, dass** die mechanische Verknüpfung zwischen dem zweiten Verknüpfungshebelarm und der beweglichen Steuerfläche am Heck eine Querwelle und einen Verbindungsarm umfasst, der sich von einer Endregion der Welle zu einem Verbindungspunkt zwischen den Enden der Welle erstreckt und lateral von der Welle beabstandet ist, wobei der zweite Verknüpfungshebelarm mechanisch mit dem Verbindungspunkt verbunden ist.

8. Direktionales Steuersystem nach Anspruch 7, **dadurch gekennzeichnet, dass** sich die erste und zweite Welle zwischen der Querwelle und dem Verbindungsarm erstrecken.

9. Direktionales Steuersystem nach Anspruch 7 oder 8, **dadurch gekennzeichnet, dass** der Verbindungsarm mit beiden Enden der Querwelle verbunden ist.

10. Direktionales Steuersystem nach Anspruch 7, 8 oder 9, **dadurch gekennzeichnet, dass** es ferner eine dritte Verknüpfung umfasst, die sich von der Querwelle erstreckt und konfiguriert ist, um eine Drehbewegung der Querwelle zu übertragen, um die bewegliche Steuerfläche am Heck zu steuern.

11. Direktionales Steuersystem nach einem der vorstehenden Ansprüche, **dadurch gekennzeichnet, dass** die zweite Welle ferner eine Sperrvorrichtung enthält, die konfiguriert ist, um eine Axial- und Drehbewegung der zweiten Welle zu beschränken, wenn das Fahrzeug für den Bodenbetrieb konfiguriert ist.

12. Direktionales Steuersystem nach einem der vorstehenden Ansprüche, **dadurch gekennzeichnet, dass** der erste und zweite Steuereingang Lenkräder oder Gabeln umfassen, die konfiguriert sind, um sich um eine gemeinsame Achse zu drehen.

13. Direktionales Steuersystem nach Anspruch 12, **dadurch gekennzeichnet, dass** der zweite Lenksteuereingang zwischen einer Flugposition, in der der zweite Steuereingang axial vom ersten Steuereingang beabstandet ist, und einer Bodenposition, in der der zweite Steuereingang im Wesentlichen auf den ersten Steuereingang ausgerichtet ist, bewegt werden kann.

14. Direktionales Steuersystem nach einem der Ansprüche 1 bis 12, **dadurch gekennzeichnet, dass** die zweite Welle aus zwei oder mehr Abschnitten gebildet ist, wobei ein erster Abschnitt der an den zweiten Steuereingang befestigten zweiten Welle von der ersten Welle entfernt werden kann, während das Fahrzeug für den Bodenbetrieb konfiguriert ist.

15. Direktionales Steuersystem nach einem der Ansprüche 1 bis 12, **dadurch gekennzeichnet, dass** der zweite Steuereingang der zweiten Welle das zweite Lenkrad ist, welches faltbare Arme aufweist, während das Fahrzeug für den Bodenbetrieb konfiguriert ist.

16. Direktionales Steuersystem nach einem der Ansprüche 1 bis 12, **dadurch gekennzeichnet, dass** der erste Steuereingang der ersten Welle das erste Lenkrad ist, das entfernbar oder durch seinen oberen Teil zur ersten Welle 201 nach vorne kippbar ist, während das Fahrzeug für den Luftbetrieb konfiguriert ist.

17. Verfahren zur Steuerung eines Hybridtransportfahrzeugs für den Boden- und Luftbetrieb, **dadurch gekennzeichnet, dass** das Fahrzeug das direktionale Steuersystem nach einem der vorstehenden Ansprüche umfasst; wobei das Verfahren umfasst:
- Steuern des Lenkens des Fahrzeugs während des Bodenbetriebs durch Manipulieren des ersten Steuereingangs, um die Räder zu lenken; und
- Steuern von Flugmanövern während des Luftbetriebs durch Manipulieren des zweiten Steuereingangs, um die Steuerflächen an den Flügeln und am Heck zu bewegen.

18. Verfahren nach Anspruch 17, **dadurch gekennzeichnet, dass** es ferner das Verlängern der zweiten Welle, sodass der zweite Steuereingang axial vom ersten Steuereingang getrennt ist, wenn das Fahrzeug für den Luftbetrieb konfiguriert wird; und das Zurückziehen der zweiten Welle, sodass der zweite Steuereingang im Wesentlichen auf den ersten Lenksteuereingang ausgerichtet ist, wenn das Fahrzeug für den Bodenbetrieb konfiguriert ist, enthält.

19. Verfahren nach Anspruch 17 oder 18, **dadurch gekennzeichnet, dass** es ferner das Ineingriffnehmen einer Sperrvorrichtung enthält, die konfiguriert ist, um die Axial- und Drehbewegung der zweiten Welle zu beschränken, wenn das Fahrzeug für den Bodenbetrieb konfiguriert wird.

20. Verfahren nach Anspruch 17, **dadurch gekennzeichnet, dass** es ferner das Entkoppeln und Entfernen des zweiten Steuereingangs und eines Abschnitts der zweiten Welle von der ersten Welle oder das Falten der Arme des zweiten Steuereingangs der zweiten Welle, die ein Rad ist, enthält, wenn das Fahrzeug für den Bodenbetrieb konfiguriert wird.

21. Verfahren nach Anspruch 17, **dadurch gekennzeichnet, dass** es ferner die Option enthält, den ersten Steuereingang der ersten Welle, die das erste Rad ist, zu entfernen, oder es enthält die Option, den ersten Steuereingang der ersten Welle, die das erste Rad ist, um seinen oberen Teil nach vorne zur ersten Welle zu kippen, wenn das Fahrzeug für den Luftbetrieb konfiguriert wird.

22. Verfahren nach Anspruch 17, 18, 19, 20 oder 21, **dadurch gekennzeichnet, dass** es ferner umfasst, während des Starts, das anfängliche Steuern des Fahrzeugs mithilfe des ersten Steuereingangs und das Übergehen zum zweiten Steuereingang; und während des Landens, das anfängliche Steuern des Fahrzeugs mithilfe des zweiten Steuereingangs und das Übergehen zum ersten Steuereingang.

## Revendications

1. Système de commande directionnelle pour un véhicule de transport hybride pour un transport terrestre et aérien comprenant au moins une roue dirigeable (161) à utiliser dans une utilisation terrestre, la roue (161) étant raccordée à un mécanisme de direction (223) ; des ailes (130) ayant des surfaces de commande mobiles (131) ; et une queue (140) ayant au moins une surface de commande mobile (141) ; dans lequel le système de commande directionnelle comprend : un premier arbre (201) ayant une première entrée de commande (211) au niveau d'une extrémité, dans lequel le premier arbre (201) est relié au mécanisme de direction (223), le système de commande directionnelle étant **caractérisé en ce qu'**il comprend un deuxième arbre (202) qui s'étend à travers le premier arbre (201) et est indépendamment rotatif et coulissant par rapport au premier arbre (201) ; le deuxième arbre (202) ayant : une deuxième entrée de commande (212) au niveau d'une extrémité, une première liaison (230) configurée pour transmettre un mouvement rotatif du deuxième arbre (202) pour commander les surfaces de commande mobiles (131) sur les ailes (130), et une deuxième liaison (240) configurée pour transmettre un mouvement axial du deuxième arbre (202) pour commander la surface de commande mobile (141) sur la queue (140).

2. Système de commande directionnelle selon la revendication 1, **caractérisé en ce que** le premier arbre est relié au mécanisme de direction au moyen d'une chaîne ou d'une courroie crantée, de façon à ce qu'un mouvement de rotation du premier arbre soit transmis à une entrée du mécanisme de direction.

3. Système de commande directionnelle selon la revendication 1 ou 2, **caractérisé en ce que** la première liaison comprend un premier bras de levier de liaison s'étendant radialement depuis le deuxième arbre.

4. Système de commande directionnelle selon la revendication 1, 2 ou 3, **caractérisé en ce que** la deuxième liaison comprend un deuxième bras de levier de liaison s'étendant radialement depuis le deuxième arbre.

5. Système de commande directionnelle selon la revendication 3 ou 4, **caractérisé en ce qu'**il comprend en outre une liaison mécanique entre le premier bras de levier de liaison et les surfaces de commande mobile sur les ailes.

6. Système de commande directionnelle selon la revendication 3, 4 ou 5, **caractérisé en ce qu'**il comprend en outre une liaison mécanique entre le deuxième bras de levier de liaison et la surface de commande mobile sur la queue.

7. Système de commande directionnelle selon la revendication 6, **caractérisé en ce que** la liaison mécanique entre le deuxième bras de levier de liaison et la surface de commande mobile sur la queue comprend un arbre transversal et un bras de raccordement s'étendant depuis une zone d'extrémité de l'arbre jusqu'à un point de raccordement entre les extrémités de l'arbre et espacé latéralement de l'arbre, le deuxième bras de levier de liaison étant raccordé mécaniquement au point de raccordement.

8. Système de commande directionnelle selon la revendication 7, **caractérisé en ce que** les premier et deuxième arbres s'étendent entre l'arbre transversal et le bras de raccordement.

9. Système de commande directionnelle selon la revendication 7 ou 8, **caractérisé en ce que** le bras de raccordement est raccordé aux deux extrémités de l'arbre transversal.

10. Système de commande directionnelle selon la revendication 7, 8 ou 9, **caractérisé en ce qu'**il comprend en outre une troisième liaison s'étendant depuis l'arbre transversal et configurée pour transmettre un mouvement de rotation de l'arbre transversal pour commander la surface de commande mobile sur la queue.

11. Système de commande directionnelle selon l'une quelconque des revendications précédentes, **caractérisé en ce que** le deuxième arbre inclut en outre un dispositif d'arrêt configuré pour restreindre un mouvement axial et de rotation du deuxième arbre quand le véhicule est configuré pour une utilisation terrestre.

12. Système de commande directionnelle selon l'une quelconque des revendications précédentes, **caractérisé en ce que** la première et la deuxième entrées de commande comprennent des roues ou fourches de direction configurées pour tourner sur un axe commun.

13. Système de commande directionnelle selon la revendication 12, **caractérisé en ce que** la deuxième entrée de commande de direction est mobile entre une position de vol dans laquelle la deuxième entrée de commande est espacée axialement depuis la première entrée de commande, et une position au sol dans laquelle la deuxième entrée de commande est sensiblement alignée à la première entrée de commande.

14. Système de commande directionnelle selon l'une quelconque des revendications 1 à 12, **caractérisé en ce que** le deuxième arbre est formé de deux sections ou plus, dans lequel une première section du deuxième arbre attaché à la deuxième entrée de commande est retirable du premier arbre tandis que le véhicule est configuré pour une utilisation terrestre.

15. Système de commande directionnelle selon l'une quelconque des revendications 1 à 12, **caractérisé en ce que** la deuxième entrée de commande du deuxième arbre est la deuxième roue de direction, qui a des bras repliables tandis que le véhicule est configuré pour une utilisation terrestre.

16. Système de commande directionnelle selon l'une quelconque des revendications 1 à 12, **caractérisé en ce que** la première entrée de commande du premier arbre est la première roue de direction, qui est retirable ou repliable vers l'avant par sa partie supérieure en direction du premier arbre 201, tandis que le véhicule est configuré pour une utilisation aérienne.

17. Procédé de commande d'un véhicule de transport hybride pour une utilisation terrestre et aérienne, **caractérisé en ce que** le véhicule comprend le système de commande directionnelle selon l'une quelconque des revendications précédentes, le procédé comprend :
- la commande de la direction du véhicule en cours d'utilisation terrestre par la manipulation de la première entrée de commande pour diriger les roues ; et
- la commande de manoeuvres de vol en cours d'utilisation en vol par la manipulation de la deuxième entrée de commande pour déplacer les surfaces de commande sur les ailes et la queue.

18. Procédé selon la revendication 17, **caractérisé en ce qu'**il inclut en outre l'extension du deuxième arbre de façon à ce que la deuxième entrée de commande soit axialement séparée de la première entrée de commande quand la configuration du véhicule est pour une utilisation aérienne ; et la rétraction du deuxième arbre de façon à ce que la deuxième entrée de commande soit sensiblement en alignement avec la première entrée de commande de direction quand la configuration du véhicule est pour une utilisation terrestre.

19. Procédé selon la revendication 17 ou 18, **caractérisé en ce qu'il** inclut en outre la mise en prise d'un dispositif d'arrêt configuré pour restreindre un mouvement axial et de rotation du deuxième arbre lors de la configuration du véhicule pour une utilisation terrestre.

20. Procédé selon la revendication 17, **caractérisé en ce qu'il** inclut en outre le désacouplement et le retrait de la deuxième entrée de commande et d'une section du deuxième arbre depuis le premier arbre ou le pliage des bras de la deuxième entrée de commande du deuxième arbre, qui est une roue, lors de la configuration du véhicule pour une utilisation terrestre.

21. Procédé selon la revendication 17, **caractérisé en ce qu'il** inclut en outre la possibilité de retirer la première entrée de commande du premier arbre, qui est la première roue, ou **en ce qu'**il inclut la possibilité d'incliner la première entrée de commande du premier arbre, qui est la première roue, par sa partie supérieure vers l'avant en direction du premier arbre, lors de la configuration du véhicule pour une utilisation aérienne.

22. Procédé selon la revendication 17, 18, 19, 20 ou 21, **caractérisé en ce qu'il** inclut en outre, pendant le décollage, la commande initiale du véhicule en utilisant la première entrée de commande et la transition vers la deuxième entrée de commande ; et pendant l'atterrissage, la commande initiale du véhicule en utilisant la deuxième entrée de commande et la transition vers la première entrée de commande.
